# EUROPÄISCHE PATENTSCHRIFT

(11) **EP 4 226 443 B1**
(45) Veröffentlichungstag und Bekanntmachung des Hinweises auf die Patenterteilung: **20.08.2025**
(21) Anmeldenummer: 21772808.8
(22) Anmeldetag: 15.09.2021
(51) Int. Cl.: H01M 8/04089, H01M 8/243

(54) **GEHÄUSEANORDNUNG FÜR EINE BRENNSTOFFZELLE, STAPELDECKEL UND BRENNSTOFFZELLE**
HOUSING ASSEMBLY FOR A FUEL CELL, STACK COVER AND FUEL CELL
ENSEMBLE BOÎTIER POUR PILE À COMBUSTIBLE, COUVERCLE D'EMPILEMENT ET PILE À COMBUSTIBLE

(30) Priorität: 06.10.2020 DE 102020212595
(43) Veröffentlichungstag der Anmeldung: 16.08.2023
(73) Patentinhaber: Robert Bosch GmbH, 70442 Stuttgart (DE); PowerCell Sweden AB, 41834 Gothenburg (SE)
(72) Erfinder: STIERLE, Holger, 71263 Weil Der Stadt (DE); OLEMS, Lars, 70374 Stuttgart (DE); BOEHNLEIN, Marco, 97437 Hassfurt (DE); WACHTER, Philipp, 70439 Stuttgart-Stammheim (DE); RINGK, Andreas, 96047 Bamberg (DE); FLINK, Johan, 41834 Gothenburg (SE); VELEN, Robin, 41834 Gothenburg (SE)
(74) Vertreter: Maiwald GmbH
(86) Internationale Anmeldenummer: PCT/EP2021/075274
(87) Internationale Veröffentlichungsnummer: WO 2022/073732

(56) Entgegenhaltungen:
- EP-A1- 1 788 656
- WO-A1-2012/141309
- CN-U- 210 668 485
- US-A- 5 330 858

## Beschreibung

Die vorliegend Erfindung betrifft eine Gehäuseanordnung für eine Brennstoffzelle mit einem Stapelgehäuse für einen Brennstoffzellenstapel und einem Brennstoffzellengehäuse mit einem Gehäusevolumen zum Aufnehmen des Stapelgehäuses. Die Erfindung betrifft ferner einen Stapeldeckel für das Stapelgehäuse und eine Brennstoffzelle mit der Gehäuseanordnung.

### Stand der Technik

Es sind Brennstoffzellengehäuse für Brennstoffzellen bekannt, bei welchen ein Brennstoffzellenstapel im Brennstoffzellengehäuse bzw. in einem Gehäusevolumen des Brennstoffzellengehäuses teilweise beabstandet von einer Gehäusewandung in einer vordefinierten Position befestigt ist bzw. vor einem Verkippen gesichert ist. Zum Halten des Brennstoffzellenstapels im Gehäusevolumen sowie zum Verhindern eines Verrutschens und/oder Kippens des Brennstoffzellenstapels im Gehäusevolumen wird ein Haltebauteil verwendet, das einen Haltebolzen aufweist, der sich wenigstens teilweise im Gehäusevolumen befindet und den Brennstoffzellenstapel in der gewünschten Position hält. Patentschrift US 5 330 858 A offenbart ein Brennstoffzellengehäuse gemäß dem Stand der Technik bei dem die Befestigung des Brennstoffzellenstapels nicht mit einem Haltebolzen, sondern mit einer Befestigungsplatte erfolgt, die in eine auf dem Deckel des Brennstoffzellenstapels angebrachte Führungsnut eingreift.

### Offenbarung der Erfindung

Im Rahmen der vorliegenden Erfindung werden nun eine Gehäuseanordnung, ein Stapeldeckel und eine Brennstoffzelle zum verbesserten Halten eines gattungsgemäßen Brennstoffzellenstapels in einem Brennstoffzellengehäuse, zur Verfügung gestellt. Insbesondere werden eine Gehäuseanordnung gemäß Anspruch 1, ein Stapeldeckel gemäß Anspruch 9 sowie eine Brennstoffzelle gemäß Anspruch 10 vorgeschlagen. Weitere Ausführungsformen der Erfindung ergeben sich aus den Unteransprüchen, der Beschreibung und den Figuren.

Gemäß einem ersten Aspekt der vorliegenden Erfindung wird eine Gehäuseanordnung für eine Brennstoffzelle zur Verfügung gestellt. Die Gehäuseanordnung umfasst ein Stapelgehäuse für einen Brennstoffzellenstapel mit einem Stapeldeckel, ein Brennstoffzellengehäuse mit einem Gehäusevolumen zum Aufnehmen des Stapelgehäuses, einer Gehäuse-Außenseite, einer Gehäuse-Innenseite, einer Lagerfläche an der Gehäuse-Außenseite und einer Durchgangsöffnung von der Gehäuse-Außenseite zur Gehäuse-Innenseite. Die Gehäuseanordnung weist ferner ein Haltebauteil mit einer Gegen-Lagerfläche zum Lagern des Haltebauteils an der Lagerfläche und einem Haltebolzen zum Halten des Stapelgehäuses in einer vordefinierten Position im Gehäusevolumen auf. Der Haltebolzen erstreckt sich durch die Durchgangsöffnung von der Gehäuse-Außenseite außerhalb des Gehäusevolumens zur Gehäuse-Innenseite und über die Gehäuse-Innenseite hinaus in das Gehäusevolumen hinein. Der Stapeldeckel weist ein Loslager mit einem Sackloch zum Lagern des Haltebolzens auf.

Das Loslager kann auf kostengünstige Weise in den Stapeldeckel integriert werden. Mit dem Loslager kann der Haltebolzen außerdem auf einfache Weise stabil am Stapelgehäuse gelagert werden. Die Lagerbewegung des Loslagers wird hierbei insbesondere in einer Längsrichtung des Haltebolzens ermöglicht, um eine Ausdehnung des Brennstoffzellenstapels während eines Betriebs der Brennstoffzelle ausgleichen zu können. Der Haltebolzen ist entsprechend in seiner Längsrichtung in das Sackloch eingeschoben.

Gattungsgemäße Stapeldeckel sind vorzugsweise als Hohlkörper mit einer Versteifungsstruktur ausgestaltet. Dadurch, dass das Loslager ein Sackloch zum Lagern des Haltebolzens aufweist kann verhindert werden, dass sich Schmutz im Holkörper bzw. in einem Deckelvolumen des Stapeldeckels ansammelt.

Das Brennstoffzellengehäuse kann einen Gehäusedeckel aufweisen, der als separates Bauteil zum Brennstoffzellengehäuse bereitgestellt sein oder werden kann. Das Haltebauteil wird vorzugsweise fest am Gehäusedeckel befestigt, insbesondere durch ein Klebemittel mit dem Gehäusedeckel verklebt. Findet nun ein Austausch des Brennstoffzellenstapels statt, kann nur der Gehäusedeckel mit dem Haltebauteil ausgetauscht werden. Das heißt, das Brennstoffzellengehäuse muss nicht vollständig ersetzt werden.

Durch das Klebemittel kann auf einfache Weise eine robuste Halteverbindung zwischen dem Haltebauteil und dem Brennstoffzellengehäuse und/oder dem Gehäusedeckel geschaffen werden. Der Brennstoffzellenstapel kann in Verbindung mit dem Loslager damit entsprechend einfach, platzsparend und stabil im Brennstoffzellengehäuse bzw. im Gehäusevolumen des Brennstoffzellengehäuses gehalten und gegen Verrutschen und/oder Kippen gesichert werden.

Durch das Klebemittel wird vorzugsweise eine stoffschlüssige Verbindung zwischen dem Haltebauteil und der Gehäuse-Außenseite hergestellt. Das heißt, zwischen dem Klebemittel und der Gehäuse-Außenseite sowie zwischen dem Klebemittel und der Gehäuse-Außenseite kann eine stoffschlüssige Klebeverbindung bestehen, wobei das Klebemittel sandwichartig zwischen wenigstens einem Teil der Gehäuse-Außenseite und wenigstens einem Teil des Haltebauteils positioniert ist. Das Klebemittel kann in Form eines geeigneten Klebstoffs und/oder beispielsweise einer Klebefolie bereitgestellt sein. Alternativ können das Haltebauteil und insbesondere ein Lagerkörper des Haltebauteils auch mit dem Brennstoffzellengehäuse, insbesondere mit der Gehäuse-Außenseite, verschweißt sein oder werden.

Unter dem Halten des Brennstoffzellenstapels im Gehäusevolumen kann verstanden werden, dass der Brennstoffzellenstapel gegen Verrutschen und/oder Kippen im Gehäusevolumen gesichert ist und/oder wird. Der Haltebolzen kann stiftförmig, zapfenförmig und insbesondere zylinderförmig ausgestaltet sein. Das Haltebauteil und/oder der Haltebolzen bestehen vorzugsweise aus Metall, insbesondere aus Aluminium. Das Haltebauteil kann T-, Pilz- und/oder Flanschförmig ausgestaltet sein. Der Haltebolzen kann mithin in und/oder an einem ring- und/oder flanschförmigen Lagerkörper des Haltebauteils mit der Gegen-Lagerfläche befestigt sein. Der Lagerkörper kann wenigstens ein Sackloch aufweisen, in welches jeweils wenigstens ein Haltebolzen eingepresst ist. Das Haltebauteil kann einstückig oder mehrstückig ausgestaltet sein. Bei einer einstückigen Ausgestaltung können der Lagerkörper und der wenigstens eine Haltebolzen miteinander verschweißt oder als monolithischer Körper ausgestaltet sein. Eine einstückige, integrale und/oder monolithische Ausgestaltung des Haltebauteils kann eine vorteilhafte Dichtwirkung schaffen, durch welche verhindert werden kann, dass der wenigstens eine Haltebolzen in Kontakt mit der Umgebung der Brennstoffzelle kommt. Das Haltebauteil kann mithin wenigstens einen Haltebolzen aufweisen. Das Haltebauteil kann somit beispielsweise zwei Haltebolzen zum Halten des Stapelgehäuses in einer vordefinierten Position im Gehäusevolumen aufweisen. In diesem Fall können sich die beiden Haltebolzen bzw. ein erster Haltebolzen und ein zweiter Haltebolzen jeweils durch die Durchgangsöffnung von der Gehäuse-Außenseite außerhalb des Gehäusevolumens zur Gehäuse-Innenseite und über die Gehäuse-Innenseite hinaus in das Gehäusevolumen hinein erstrecken, wobei der Stapeldeckel ein Loslager mit einem ersten Sackloch zum Lagern des ersten Haltebolzens und ein zweites Sackloch zum Lagern des zweiten Sacklochs aufweist. Damit kann eine Torsion des Brennstoffzellenstapels verhindert werden.

Das Sackloch ist vorzugsweise in Form einer Bohrung und/oder zylinderförmig ausgestaltet. Darunter, dass der Stapeldeckel ein Loslager mit einem Sackloch zum Lagern des Haltebolzens aufweist kann verstanden werden, dass der Stapeldeckel ein Loslager mit einem Sackloch zum Lagern des Haltebolzens oder von wenigstens einem Teil des Haltebolzens im Sackloch aufweist.

Zwischen einer loslagerseitigen Stirnseite des Haltebolzens und einer Sacklochbodenfläche des Sacklochs besteht, zumindest in einem normalen Betriebszustand des Brennstoffzellensystems, vorzugsweise ein Loslager-Lagerspiel in einem Bereich zwischen 5 mm und 30 mm, insbesondere in einem Bereich zwischen 5 mm und 20 mm. Damit kann ein ausreichendes Spiel bei einer gleichzeitig kompakten Bauweise der Brennstoffzelle realisiert werden.

Das Sackloch weist vorzugsweise eine Tiefe auf, die in einem Bereich zwischen 70 % und 150 % einer Höhe bzw. Dicke des Stapeldeckels liegt. Das Loslager kann als separates Bauteil zum restlichen Stapeldeckel oder als integraler und/oder monolithischer Bestandteil des Stapeldeckels ausgestaltet sein. So kann der Stapeldeckel als 3D-Druck-Teil oder als Rapid-Prototype-Teil ausgestaltet sein.

Gemäß einer weiteren Ausführungsform der vorliegenden Erfindung ist es möglich, dass der Stapeldeckel bei einer Gehäuseanordnung als Hohlkörper mit einer oberen Deckelwandung und einer unteren Deckelwandung, einem Deckelvolumen innerhalb des Hohlkörpers, einer Stapeldeckel-Außenseite außerhalb des Deckelvolumens, einer Stapeldeckel-Innenseite zum Definieren des Deckelvolumens, einer zur Durchgangsöffnung hin zeigenden Stapeldeckel-Oberseite an der Stapeldeckel-Außenseite und einer von der Durchgangsöffnung weg zeigenden Stapeldeckel-Unterseite an der Stapeldeckel-Außenseite ausgestaltet ist, wobei das Loslager eine Lagerhülse aufweist und sich wenigstens ein Teil der Lagerhülse von der unteren Deckelwandung zur oberen Deckelwandung durch das Deckelvolumen erstreckt. Dadurch kann das gewünschte Sackloch auf einfache und kostengünstige Weise durch die Lagerhülse und an einem stirnseitigen Ende der Lagerhülse durch die Stapeldeckel-Innenseite an der unteren Deckelwandung gebildet werden. Eine solche Ausgestaltung des Loslagers trägt zudem zur Stabilität des Stapeldeckels bei. Wechselwirkend kann damit außerdem das Loslager besonders stabil im Stapeldeckel ausgestaltet werden. Die untere Deckelwandung ist hierzu bevorzugt als plane bzw. ebene Wandung oder zumindest teilweise als plane bzw. ebene Wandung ausgestaltet.

Weiterhin ist es möglich, dass sich der wenigstens eine Teil der Lagerhülse bei einer Gehäuseanordnung gemäß der vorliegenden Erfindung von einer Position in der unteren Deckelwandung zwischen der Stapeldeckel-Außenseite an der Stapeldeckel-Unterseite und der Stapeldeckel-Innenseite zu einer Position an und/oder in der oberen Deckelwandung an der Stapeldeckel-Oberseite erstreckt.

Das heißt, die Lagerhülse kann in die untere Deckelwandung integriert und/oder eingesetzt ausgestaltet sein. Dadurch kann auf einfache Weise ein besonders fester Sitz des Loslagers bzw. der Lagerhülse im Stapeldeckel erreicht werden, wobei die Stapeldeckel-Unterseite zudem noch die Bodenfläche des Sacklochs bildet. Darüber hinaus kann damit eine besonders effektive Kraftübertragung vom Loslager auf den Stapeldeckel und/oder das Stapelgehäuse bei einer Querbelastung auf das Loslager erzielt werden. Daraus resultiert eine vorteilhafte Kraftverteilung in der Gehäuseanordnung, welche wiederum einen möglichst reibungsfreien und/oder zerstörungsfreien Betrieb des Brennstoffzellensystems gewährleistet. Die Lagerhülse kann als separates Bauteil mit Durchgangsöffnung oder als Teil von einem Bauteil mit Sackloch, das also an einer Stirnseite geschlossen ist, verstanden werden. Die Lagerhülse oder das beschriebene Bauteil können als separate Bauteile zum Stapeldeckel oder als integraler und/oder monolithischer Bestandteil des Stapeldeckels ausgestaltet sein. Weiterhin kann es von Vorteil sein, wenn sich wenigstens ein Teil des Loslagers und/oder von der Lagerhülse vom Stapeldeckel in Richtung der Durchgangsöffnung über eine obere Deckelwandung des Stapeldeckels hinaus erstreckt. Damit können das Einführen des Lagerbolzens in das Sackloch sowie die Fertigung des Stapeldeckels vereinfacht werden.

Weiterhin ist es möglich, dass bei einer Gehäuseanordnung gemäß der vorliegenden Erfindung das Sackloch eine Sacklochseitenfläche aufweist und in wenigstens einem Teil des Sacklochs ein Gegen-Haltemittel, zum Halten des Haltebolzens beabstandet von der Sacklochseitenfläche innerhalb des Sacklochs, ausgestaltet ist. Für den Fall einer Abnutzung des Loslagers kann beispielsweise nur das Gegen-Haltemittel ersetzt werden. Das heißt, es muss nicht das ganze Loslager ersetzt oder repariert werden. Das Gegen-Haltemittel kann hierzu zerstörungsfrei lösbar aus dem Sackloch im und/oder am Loslager befestigt sein. Das Gegen-Haltemittel kann ferner wenigstens einen Luftausgleichsabschnitt, beispielsweise in Form von wenigstens einer Durchgangsöffnung, in Form von Schlitzen und/oder Nuten, für einen Luftauslass aus dem Sackloch beim Einführen des Haltebolzens in das Sackloch, aufweisen. Damit können ein Luftwiderstand gegen den Haltebolzen beim Einführen des Haltebolzens in das Sackloch verhindert und trotzdem ein in Querrichtung relativ fester Sitz des Haltebolzens im Sackloch erreicht werden.

Als besonders vorteilhaft hat es sich herausgestellt, wenn das Gegen-Haltemittel bei einer Gehäuseanordnung gemäß der vorliegenden Erfindung ein Gelenklager aufweist oder in Form eines Gelenklagers ausgestaltet ist. Durch das Gelenklager wird ein Ausgleich zu einem Winkelversatz des Brennstoffzellenstapels ermöglicht. Das heißt, für den Fall, dass der Brennstoffzellenstapel leicht verkippt und/oder schief im Brennstoffzellengehäuse bzw. im Gehäusevolumen installiert ist und das Sackloch einen entsprechenden Winkelversatz aufweist, kann dies mit einer leichten Auslenkung des Gelenklagers ausgeglichen werden, sodass der Haltebolzen stabil im Sackloch gehalten werden kann. Das Gelenklager kann als Einsatzteil im Sackloch bzw. im Loslager installiert sein. Das Gelenklager kann teilweise im Sackloch positioniert sein und/oder teilweise aus dem Sackloch herausragen.

Weiterhin kann es von Vorteil sein, wenn bei einer Gehäuseanordnung gemäß der vorliegenden Erfindung das Loslager beabstandet von der Durchgangsöffnung und/oder von der Gehäuse-Innenseite ausgestaltet ist. Damit kann verhindert werden, dass es bei einer Ausdehnung des Brennstoffzellenstapels während eines Betriebs des Brennstoffzellensystems zu Schäden in und/oder an der Gehäuseanordnung kommt. Unter dem Abstand zwischen dem Loslager und der Durchgangsöffnung kann insbesondere ein Abstand zwischen einer Oberseite des Loslagers und/oder einer Stirnseite der Lagerhülse und einer Ebene durch die Durchgangsöffnung entlang der Gehäuse-Innenseite, verstanden werden. Dieser Abstand beträgt bevorzugt einen Wert in einem Bereich zwischen 5 mm und 20 mm, insbesondere in einem Bereich zwischen 5 mm und 15 mm.

Gemäß einer weiteren Ausgestaltungsvariante der vorliegenden Erfindung ist es möglich, dass eine Gehäuseanordnung ein Durchgangsöffnungs-Lagerspiel in der Durchgangsöffnung zwischen einer Außenumfangsfläche des Haltebolzens und einer Innenumfangsfläche der Durchgangsöffnung aufweist. Das heißt, ein Innendurchmesser der Durchgangsöffnung kann deutlich größer, insbesondere in einem Bereich zwischen 50% und 500%, als der Außendurchmesser des Haltebolzens sein. Die Durchgangsöffnung kann ferner ein Lagerspiel in einem Bereich zwischen 5 mm und 15 mm aufweisen. Damit kann ein unbeabsichtigter Radialversatz des Loslagers bzw. des Sacklochs zur Durchgangsöffnung ausgeglichen werden. Das heißt, das Haltebauteil kann derart am Brennstoffzellengehäuse befestigt werden oder sein, dass der Haltebolzen exzentrisch zur Durchgangsöffnung und möglichst passgenau im Loslager bzw. im Sackloch positioniert ist. Der Haltebolzen bzw. dessen Außenumfangsfläche im Bereich der Durchgangsöffnung erstreckt bei einer solchen Ausführungsform folglich zumindest teilweise beabstandet von der Innenumfangsfläche der Durchgangsöffnung durch die Durchgangsöffnung hindurch. Das heißt, es besteht in diesem Fall kein mechanischer Kontakt zwischen einer Außenumfangsfläche des Haltebolzens und der Innenumfangsfläche der Durchgangsöffnung. Eine Dichtwirkung für eine fluidtechnische Abdichtung des Brennstoffzellengehäuses gegenüber einer Umgebung des Brennstoffzellengehäuses kann durch das Haltebauteil und/oder das Klebemittel zwischen dem Haltebauteil und dem Brennstoffzellengehäuse realisiert werden oder sein.

Gemäß einem weiteren Aspekt der vorliegenden Erfindung wird ein Stapeldeckel zur Verfügung gestellt, der ein Loslager mit einem Sackloch zum Lagern eines Haltebolzens in einer wie vorstehend beschriebenen Gehäuseanordnung aufweist. Weiterhin wird eine Brennstoffzelle mit einem Brennstoffzellenstapel und einer wie vorstehend beschriebenen Gehäuseanordnung vorgeschlagen. Damit bringen der erfindungsgemäße Stapeldeckel und die erfindungsgemäße Brennstoffzelle die gleichen Vorteile mit sich, wie sie ausführlich mit Bezug auf die erfindungsgemäße Gehäuseanordnung beschrieben worden sind.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: eine Gehäuseanordnung gemäß einer bevorzugten Ausführungsform der vorliegenden Erfindung in einem auseinandergebauten Zustand der Gehäuseanordnung,
- Figur 2: eine Gehäuseanordnung gemäß der in Fig. 1 gezeigten Ausführungsform in einem zusammengebauten Zustand der Gehäuseanordnung,
- Figur 3: eine perspektivische Darstellung eines erfindungsgemäßen Stapeldeckels mit einem Haltebauteil,
- Figur 4: eine Brennstoffzelle mit einer erfindungsgemäßen Gehäuseanordnung.

Elemente mit gleicher Funktion und Wirkungsweise sind in den Figuren jeweils mit denselben Bezugszeichen versehen.

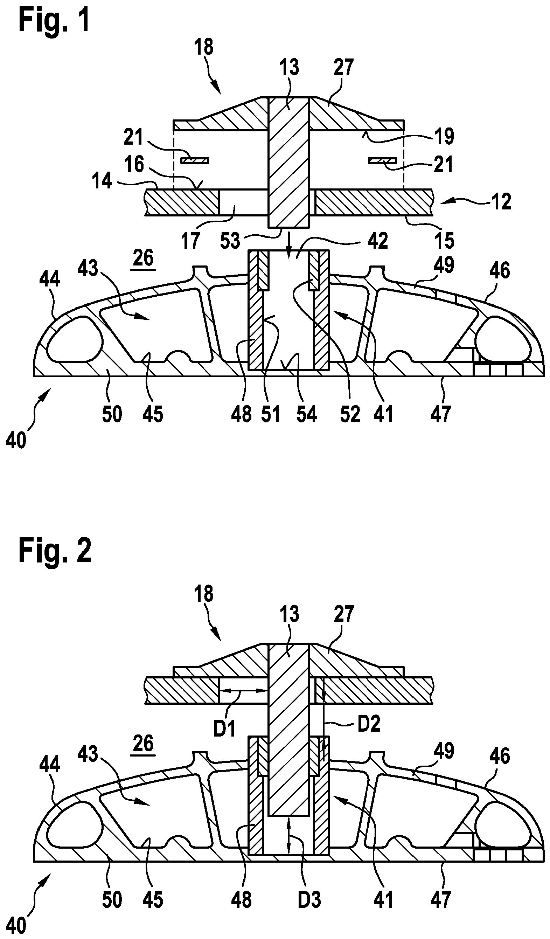

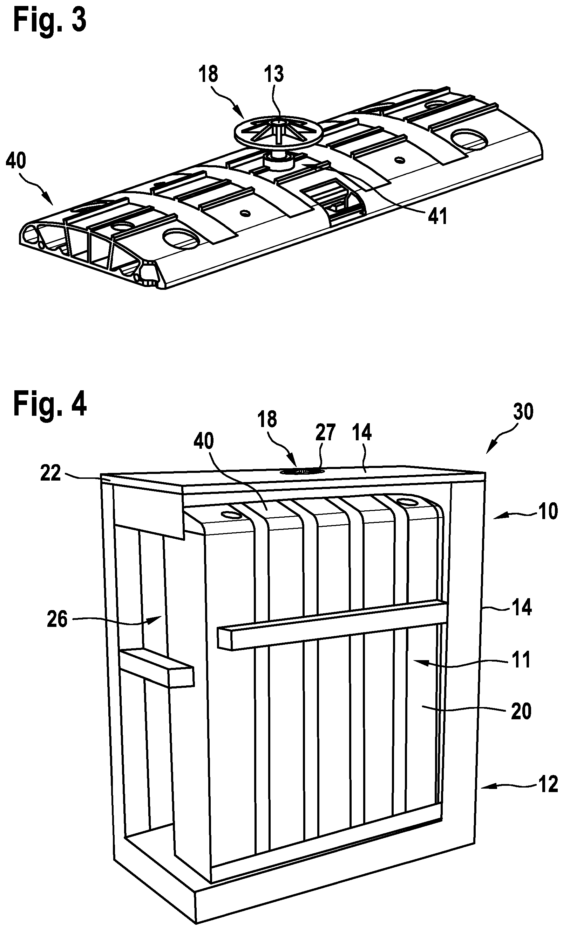

Fig. 1 zeigt einen Teil einer Gehäuseanordnung 10 für eine Brennstoffzelle 30 gemäß einer bevorzugten Ausführungsform. Die Gehäuseanordnung 10 weist einen Stapeldeckel 40 eines in Fig. 4 dargestellten Stapelgehäuses 20 auf. Die Gehäuseanordnung 10 umfasst ferner ein Brennstoffzellengehäuse 12 mit einem Gehäusevolumen 26 zum Aufnehmen des Stapelgehäuses 20, einer Gehäuse-Außenseite 14, einer Gehäuse-Innenseite 15, einer Lagerfläche 16 an der Gehäuse-Außenseite 14 und einer Durchgangsöffnung 17 von der Gehäuse-Außenseite 14 zur Gehäuse-Innenseite 15. Außerdem weist die Gehäuseanordnung 10 ein Haltebauteil 18 mit einer Gegen-Lagerfläche 19 zum Lagern des Haltebauteils 18 an der Lagerfläche 16 und einem Haltebolzen 13 zum Halten des Stapelgehäuses 20 in einer vordefinierten Position im Gehäusevolumen 26, auf. Der Haltebolzen 13 erstreckt sich durch die Durchgangsöffnung 17 von der Gehäuse-Außenseite 14 außerhalb des Gehäusevolumens 26 zur Gehäuse-Innenseite 15 und über die Gehäuse-Innenseite 15 hinaus in das Gehäusevolumen 26 hinein. Der Stapeldeckel 40 weist ein Loslager 41 mit einem Sackloch 42 zum Lagern des Haltebolzens 13 auf. Gemäß der dargestellten Ausführungsform ist der Stapeldeckel 40 als Hohlkörper mit einer oberen Deckelwandung 49 und einer unteren Deckelwandung 50, einem Deckelvolumen 43 innerhalb des Hohlkörpers, einer Stapeldeckel-Außenseite 44 außerhalb des Deckelvolumens 43, einer Stapeldeckel-Innenseite 45 zum Definieren des Deckelvolumens 43, einer zur Durchgangsöffnung 17 hin zeigenden Stapeldeckel-Oberseite 46 an der Stapeldeckel-Außenseite 44 und einer von der Durchgangsöffnung 17 weg zeigenden Stapeldeckel-Unterseite 47 an der Stapeldeckel-Außenseite 43 ausgestaltet. In Fig. 1 ist ferner ein Klebemittel 21 dargestellt, durch welches das Haltebauteil 18 bzw. ein Lagerkörper 27 des Haltebauteils an das Brennstoffzellengehäuse 12 bzw. an die Gehäuse-Außenseite 14 geklebt wird.

Das Loslager 41 weist eine Lagerhülse 48 auf, die sich teilweise von der unteren Deckelwandung 50 zur oberen Deckelwandung 49 durch das Deckelvolumen 43 erstreckt. Genauer gesagt erstreckt sich der überwiegende Teil der Lagerhülse 48 von einer Position in der unteren Deckelwandung 50 zwischen der Stapeldeckel-Außenseite 44 an der Stapeldeckel-Unterseite 47 und der Stapeldeckel-Innenseite 45 zu einer Position in der oberen Deckelwandung 49 an der Stapeldeckel-Oberseite 46 und in Richtung der Durchgangsöffnung 17 darüber hinaus. Das Sackloch 42 wird mithin durch die Innenwandfläche bzw. die Sacklochseitenfläche 51 und die Stapeldeckel-Innenseite 45 gebildet. Im oberen Randbereich des Sacklochs 42 ist ein Gegen-Haltemittel 52, zum Halten des Haltebolzens 13 beabstandet von der Sacklochseitenfläche 51 innerhalb des Sacklochs 42, ausgestaltet. Das Gegen-Haltemittel 52 ist in Form eines im Sackloch installierten Gelenklagers ausgestaltet.

Fig. 2 zeigt die Gehäuseanordnung 10 in einem zusammengebauten Zustand, in welchem das Haltebauteil 18 mit dem Brennstoffzellengehäuse 12 verklebt ist. Das Loslager 41 ist gemäß der dargestellten Ausführungsform beabstandet von der Durchgangsöffnung 17 sowie beabstandet von der Gehäuse-Innenseite 15 ausgestaltet. Der Abstand D2 zwischen dem Loslager 41 und der Gehäuse-Innenseite 15 im Bereich der Durchgangsöffnung 17 hängt vom Ausdehnungszustand des Brennstoffzellenstapels 11 ab. In Fig. 2 beträgt der Abstand D2 ca. 10 mm.

Die gezeigte Gehäuseanordnung 10 weist darüber hinaus ein Durchgangsöffnungs-Lagerspiel D1 in der Durchgangsöffnung zwischen einer Außenumfangsfläche des Haltebolzens 13 und einer Innenumfangsfläche der Durchgangsöffnung 17 auf. Das Durchgangsöffnungs-Lagerspiel D1 bzw. der entsprechende, größte Abstand zwischen der Innenumfangsfläche der Durchgangsöffnung 17 und der Außenumfangsfläche des Haltebolzens 13 beträgt im dargestellten Fall ca. 12 mm. Außerdem besteht zwischen einer loslagerseitigen Stirnseite 53 des Haltebolzens 13 und einer Sacklochbodenfläche 54 des Sacklochs 42 ein Loslager-Lagerspiel D3, dessen Größe sich ebenfalls vom aktuellen Ausdehnungszustand des Brennstoffzellenstapels 11 verändert bzw. bei Ausdehnen des Brennstoffzellenstapels 11 kleiner wird. Im dargestellten Fall beträgt das Loslager-Lagerspiel ca. 11 mm. Das Loslager 41 ist im gezeigten Beispiel zudem als ein in den Stapeldeckel 40 integriertes Bauteile ausgestaltet.

Fig. 3 zeigt einen Stapeldeckel 40 mit einem wie vorstehend beschriebenen Loslager 41 zum Lagern des Haltebolzens 13 in der Gehäuseanordnung 10. Fig. 4 zeigt eine Brennstoffzelle 30 mit einem Brennstoffzellenstapel 11 und einer wie vorstehend im Detail beschriebenen Gehäuseanordnung 10. Die Brennstoffzelle 30 weist ein Brennstoffzellengehäuse 12 mit einem Gehäusedeckel 22 auf, an welchem das Haltebauteil 18 befestigt ist.

Die Erfindung lässt neben den dargestellten Ausführungsformen weitere Gestaltungsgrundsätze zu. D.h., die Erfindung soll nicht auf die mit Bezug auf die Figuren erläuterten Ausführungsbeispiele beschränkt betrachtet werden. Der Schutzumfang der Erfindung ist durch die folgenden Ansprüche definiert.

## Patentansprüche

1. Gehäuseanordnung (10) für eine Brennstoffzelle (30), aufweisend:
- ein Stapelgehäuse (20) für einen Brennstoffzellenstapel (11) mit einem Stapeldeckel (40),
- ein Brennstoffzellengehäuse (12) mit einem Gehäusevolumen (26) zum Aufnehmen des Stapelgehäuses (20), einer Gehäuse-Außenseite (14), einer Gehäuse-Innenseite (15), einer Lagerfläche (16) an der Gehäuse-Außenseite (14) und einer Durchgangsöffnung (17) von der Gehäuse-Außenseite (14) zur Gehäuse-Innenseite (15), und
- ein Haltebauteil (18) mit einer Gegen-Lagerfläche (19) zum Lagern des Haltebauteils (18) an der Lagerfläche (16) und einem Haltebolzen (13) zum Halten des Stapelgehäuses (20) in einer vordefinierten Position im Gehäusevolumen (26),
- wobei sich der Haltebolzen (13) durch die Durchgangsöffnung (17) von der Gehäuse-Außenseite (14) außerhalb des Gehäusevolumens (26) zur Gehäuse-Innenseite (15) und über die Gehäuse-Innenseite (15) hinaus in das Gehäusevolumen (26) hinein erstreckt, und
- wobei der Stapeldeckel (40) ein Loslager (41) mit einem Sackloch (42) zum Lagern des Haltebolzens (13) aufweist.

2. Gehäuseanordnung (10) nach Anspruch 1,
**dadurch gekennzeichnet,**
**dass** der Stapeldeckel (40) als Hohlkörper mit einer oberen Deckelwandung (49) und einer unteren Deckelwandung (50), einem Deckelvolumen (43) innerhalb des Hohlkörpers, einer Stapeldeckel-Außenseite (44) außerhalb des Deckelvolumens (43), einer Stapeldeckel-Innenseite (45) zum Definieren des Deckelvolumens (43), einer zur Durchgangsöffnung (17) hin zeigenden Stapeldeckel-Oberseite (46) an der Stapeldeckel-Außenseite (44) und einer von der Durchgangsöffnung (17) weg zeigenden Stapeldeckel-Unterseite (47) an der Stapeldeckel-Außenseite (43) ausgestaltet ist, wobei das Loslager (41) eine Lagerhülse (48) aufweist und sich wenigstens ein Teil der Lagerhülse (48) von der unteren Deckelwandung (50) zur oberen Deckelwandung (49) durch das Deckelvolumen (43) erstreckt.

3. Gehäuseanordnung (10) nach Anspruch 2,
**dadurch gekennzeichnet,**
**dass** sich der wenigstens eine Teil der Lagerhülse (48) von einer Position in der unteren Deckelwandung (50) zwischen der Stapeldeckel-Außenseite (44) an der Stapeldeckel-Unterseite (47) und der Stapeldeckel-Innenseite (45) zu einer Position an und/oder in der oberen Deckelwandung (49) an der Stapeldeckel-Oberseite (46) erstreckt.

4. Gehäuseanordnung (10) nach einem der voranstehenden Ansprüche, **dadurch gekennzeichnet,**
**dass** das Sackloch (42) eine Sacklochseitenfläche (51) aufweist und in wenigstens einem Teil des Sacklochs (42) ein Gegen-Haltemittel (52), zum Halten des Haltebolzens (13) beabstandet von der Sacklochseitenfläche (51) innerhalb des Sacklochs (42), ausgestaltet ist.

5. Gehäuseanordnung (10) nach einem der voranstehenden Ansprüche **dadurch gekennzeichnet,**
**dass** das Gegen-Haltemittel (52) ein Gelenklager aufweist oder in Form eines Gelenklagers ausgestaltet ist.

6. Gehäuseanordnung (10) nach einem der voranstehenden Ansprüche, **dadurch gekennzeichnet,**
**dass** das Loslager (41) beabstandet von der Durchgangsöffnung (17) und/oder von der Gehäuse-Innenseite (15) ausgestaltet ist.

7. Gehäuseanordnung (10) nach einem der voranstehenden Ansprüche, **gekennzeichnet durch**,
ein Durchgangsöffnungs-Lagerspiel (D1) in der Durchgangsöffnung zwischen einer Außenumfangsfläche des Haltebolzens (13) und einer Innenumfangsfläche der Durchgangsöffnung (17).

8. Gehäuseanordnung (10) nach einem der voranstehenden Ansprüche, **dadurch gekennzeichnet,**
**dass** das Loslager (41) als ein in den Stapeldeckel (40) integriertes Bauteile ausgestaltet ist.

9. Stapeldeckel (40) für eine Brennstoffzelle (30) mit einer Gehäuseanordnung (10) nach einem der voranstehenden Ansprüche, aufweisend ein Loslager (41) mit einem Sackloch (42) zum Lagern eines Haltebolzens (13).

10. Brennstoffzelle (30) mit einem Brennstoffzellenstapel (11) und einer Gehäuseanordnung (10) nach einem der Ansprüche 1 bis 8.

## Claims

1. A housing assembly (10) for a fuel cell (30), comprising:
- a stack housing (20) for a fuel cell stack (11) with a stack cover (40),
- a fuel cell housing (12) with a housing volume (26) for accommodating the stack housing (20), a housing outer side (14), a housing inner side (15), a bearing surface (16) on the housing outer side (14) and a through opening (17) from the housing outer side (14) to the housing inner side (15), and
- a retaining component (18) with a mating bearing surface (19) for bearing the retaining component (18) on the bearing surface (16) and a retaining bolt (13) for holding the stack housing (20) in a predefined position in the housing volume (26),
- wherein the retaining bolt (13) extends through the through opening (17) from the housing outer side (14) outside the housing volume (26) to the housing inner side (15) and beyond the housing inner side (15) into the housing volume (26), and
- wherein the stack cover (40) has a floating bearing (41) with a blind hole (42) for mounting the retaining bolt (13).

2. The housing assembly (10) according to claim 1,
**characterised in that**
the stack cover (40) is in the form of a hollow body having an upper cover wall (49) and a lower cover wall (50), a cover volume (43) inside the hollow body, a stack cover outer side (44) outside the cover volume (43), a stack cover inner side (45) for defining the cover volume (43), a stack cover upper side (46) on the stack cover outer side (44) pointing towards the through opening (17) and a stack cover lower side (47) on the stack cover outer side (44) pointing away from the through opening (17), wherein the floating bearing (41) has a bearing sleeve (48) and at least a part of the bearing sleeve (48) extends from the lower cover wall (50) to the upper cover wall (49) through the cover volume (43).

3. The housing assembly (10) according to claim 2,
**characterised in that**
the at least one part of the bearing sleeve (48) extends from a position in the lower cover wall (50) between the stack cover outer side (44) on the stack cover lower side (47) and the stack cover inner side (45) to a position on and/or in the upper cover wall (49) on the stack cover upper side (46).

4. The housing assembly (10) according to any one of the preceding claims,
**characterised in that**
the blind hole (42) comprises a blind hole side surface (51) and a counter retaining means (52) is formed in at least a part of the blind hole (42), for retaining the retaining bolt (13) at a distance from the blind hole side surface (51) within the blind hole (42).

5. The housing assembly (10) according to any one of the preceding claims,
**characterised in that**
the mating retaining means (52) comprises a spherical bearing or is designed in the form of a spherical bearing.

6. The housing assembly (10) according to any one of the preceding claims,
**characterised in that**
the floating bearing (41) is designed at a distance from the through opening (17) and/or from the housing inner side (15).

7. The housing assembly (10) according to any one of the preceding claims,
**characterised by**
a through opening bearing clearance (D1) in the through opening between an outer circumferential surface of the retaining bolt (13) and an inner circumferential surface of the through opening (17).

8. The housing assembly (10) according to any one of the preceding claims,
**characterised in that**
the floating bearing (41) is designed as a component integrated into the stack cover (40).

9. A stack cover (40) for a fuel cell with a housing assembly (10) according to any one of the preceding claims, having a floating bearing (41) with a blind hole (42) for mounting a retaining bolt (13).

10. A fuel cell (30) comprising a fuel cell stack (11) and a housing assembly (10) according to any one of claims 1 to 8.

## Revendications

1. Ensemble boîtier (10) pour une pile à combustible (30), comportant :
- un boîtier d'empilement (20) pour un empilement de pile à combustible (11) comportant un couvercle d'empilement (40),
- un boîtier de pile à combustible (12) comportant un volume de boîtier (26) pour recevoir le boîtier d'empilement (20), d'un côté extérieur de boîtier (14), d'un côté intérieur de boîtier (15), d'une surface d'appui (16) sur le côté extérieur de boîtier (14), et d'une ouverture traversante (17) allant du côté extérieur de boîtier (14) au côté intérieur de boîtier (15), et
- un composant de retenue (18) doté d'une surface d'appui complémentaire (19) pour loger le composant de retenue (18) sur la surface d'appui (16) et d'un boulon de retenue (13) pour retenir le boîtier d'empilement (20) dans une position prédéfinie dans le volume de boîtier (26),
- dans lequel le boulon de retenue (13) s'étend à travers l'ouverture traversante (17) à partir du côté extérieur de boîtier (14) à l'extérieur du volume de boîtier (26) jusqu'au côté intérieur de boîtier (15) et au-delà du côté intérieur de boîtier (15) dans le volume de boîtier (26), et
- dans lequel le couvercle d'empilement (40) comporte un palier libre (41) doté d'un trou borgne (42) pour loger le boulon de retenue (13).

2. Ensemble boîtier (10) selon la revendication 1,
**caractérisé en ce que**
le couvercle d'empilement (40) est réalisé sous la forme d'un corps creux doté d'une paroi de couvercle supérieure (49) et d'une paroi de couvercle inférieure (50), d'un volume de couvercle (43) à l'intérieur du corps creux, d'un côté extérieur de couvercle d'empilement (44) à l'extérieur du volume de couvercle (43), d'un côté intérieur de couvercle d'empilement (45) pour définir le volume de couvercle (43), d'un côté supérieur de couvercle d'empilement (46) orienté vers l'ouverture traversante (17) et situé sur le côté extérieur de couvercle d'empilement (44), et d'un côté inférieur de couvercle d'empilement (47) orienté dans la direction opposée à l'ouverture traversante (17) et situé sur le côté extérieur de couvercle d'empilement (43), le palier libre (41) comportant un coussinet (48) et au moins une partie du coussinet (48) s'étendant de la paroi de couvercle inférieure (50) à la paroi de couvercle supérieure (49) à travers le volume de couvercle (43).

3. Ensemble boîtier (10) selon la revendication 2,
**caractérisé en ce que**
l'au moins une partie du coussinet (48) s'étend à partir d'une position située dans la paroi de couvercle inférieure (50) entre le côté extérieur de couvercle d'empilement (44) sur le côté inférieur de couvercle d'empilement (47) et le côté intérieur de couvercle d'empilement (45) jusqu'à une position située sur et/ou dans la paroi de couvercle supérieure (49) sur le côté supérieur de couvercle d'empilement (46).

4. Ensemble boîtier (10) selon l'une des revendications précédentes,
**caractérisé en ce que**
le trou borgne (42) comporte une surface latérale de trou borgne (51) et un moyen de retenue complémentaire (52), pour retenir le boulon de retenue (13) à l'intérieur du trou borgne (42) à une distance de la surface latérale de trou borgne (51), est réalisé dans au moins une partie du trou borgne (42).

5. Ensemble boîtier (10) selon l'une des revendications précédentes,
**caractérisé en ce que**
le moyen de retenue complémentaire (52) comporte une rotule lisse ou est réalisé sous la forme d'une rotule lisse.

6. Ensemble boîtier (10) selon l'une des revendications précédentes,
**caractérisé en ce que**
le palier libre (41) est réalisé espacé de l'ouverture traversante (17) et/ou du côté intérieur de boîtier (15).

7. Ensemble boîtier (10) selon l'une des revendications précédentes,
**caractérisé par**
un jeu de palier d'ouverture traversante (D1) dans l'ouverture traversante, situé entre une surface circonférentielle extérieure du boulon de retenue (13) et une surface circonférentielle intérieure de l'ouverture traversante (17).

8. Ensemble boîtier (10) selon l'une des revendications précédentes,
**caractérisé en ce que**
le palier libre (41) est réalisé sous la forme d'un composant intégré dans le couvercle d'empilement (40).

9. Couvercle d'empilement (40) pour pile à combustible (30) dotée d'un ensemble boîtier (10) selon l'une des revendications précédentes, comportant un palier libre (41) doté d'un trou borgne (42) pour loger un boulon de retenue (13).

10. Pile à combustible (30) comportant un empilement de pile à combustible (11) et un ensemble boîtier (10) selon l'une des revendications 1 à 8.
